# EUROPÄISCHE PATENTSCHRIFT

(11) **EP 1 538 880 B1**
(45) Veröffentlichungstag und Bekanntmachung des Hinweises auf die Patenterteilung: **25.10.2006**
(21) Anmeldenummer: 05003082.4
(22) Anmeldetag: 01.08.2002
(51) Int. Cl.: H05B 39/04, G01J 1/42, G05D 25/02

(54) **Messvorrichtung mit mehreren Sensoren zum Erfassen des Aussenlichts**
Ambient light sensing device comprising a plurality of sensors
Dispositif de mesure de luminosité ambiante comprenant plusieurs capteurs

(30) Priorität: 17.08.2001 DE 10140415
(43) Veröffentlichungstag der Anmeldung: 08.06.2005
(62) Teilanmeldung aus: 02016962.9
(73) Patentinhaber: Zumtobel Lighting GmbH, 6850 Dornbirn (AT)
(72) Erfinder: Werner, Walter, Dr., 6850 Dornbirn (AT); Geiginger, Joachim, Dipl.-Ing., 6845 Hohenems (AT); Jödicke, Bernd, Prof., Dr., 78256 Steisslingen (DE); Mattner, Thomas, Dipl.-Ing., (FH), 88213 Ravensburg (DE)
(74) Vertreter: Schmidt-Evers, Jürgen

(56) Entgegenhaltungen:
- DE-A1- 10 059 723
- US-A- 4 491 727
- LITTLEFAIR P J: "MEASUREMENTS OF THE LUMINOUS EFFICACY OF DAYLIGHT" INTERNATIONAL JOURNAL OF LIGHTING RESEARCH AND TECHNOLOGY, CHARTERED INSTITUTION OF BUILDING SERVICES ENGINEERS, LIGHTING, GB, Bd. 20, Nr. 4, 1988, Seiten 177-188, XP008001426 ISSN: 1365-7828

## Beschreibung

Die vorliegende Erfindung betrifft eine Meßvorrichtung, die mehrere Helligkeitssensoren aufweist und zum Erfassen des Außenlichts vorgesehen ist.

Ein wesentlicher Bestandteil des modernden Gebäudemanagements besteht in einer der Raumnutzung angepaßten Beleuchtungsregelung sowie einer Optimierung des damit verbundenen Energieverbrauchs. Um den Energieverbrauch zur Beleuchtung von Gebäuden zu senken, ist es unerläßlich, das vorhandene Tageslicht mit einzubeziehen und zu nutzen. Dies wird beispielsweise durch Regelungssysteme erreicht, die einen in dem zu beleuchtenden Raum angeordneten Helligkeitssensor aufweisen, wobei eine mit dem Sensor verbundene Steuerschaltung in Abhängigkeit von dem Sensorsignal Dimmsignale für die in dem Raum angeordneten Leuchten erzeugt. Hierdurch besteht die Möglichkeit, unabhängig von dem aktuell vorliegenden Außenlicht eine konstante Helligkeit innerhalb des Raumes zu erzielen.

Ein Nachteil eines derartigen Systems mit in jedem Raum angeordneten Helligkeitssensoren besteht allerdings darin, daß die Helligkeitssteuerung durch innerhalb des Raumes befindliche Gegenstände in ungewünschter Weise beeinflußt werden kann. Ist beispielsweise bei einem Büroraum innerhalb des Detektionsbereiches des Helligkeitssensors ein Schreibtisch angeordnet, so kann der Fall auftreten, daß der Helligkeitssensor aufgrund von auf dem Schreibtisch liegendem und das Licht reflektierendem Papier eine hohe Helligkeit feststellt. In Folge davon wird das Innenlicht verstärkt gedimmt, so daß in dem Raum insgesamt eine zu geringe Helligkeit vorliegt.

Um derartige Probleme zu vermeiden, sind Systeme bekannt, welche ausschließlich das vorhandene Außenlicht bzw. Tageslicht bestimmen und hierfür eine einzige außerhalb des Gebäudes angeordnete Außenlicht-Meßvorrichtung aufweisen, mit der sowohl die Intensität als auch die Richtungsabhängigkeit des Außenlichts bestimmt wird. Ferner ist für jeden Raum die Lage sowie die Anordnung der Fenster bekannt, da jeder Raum aufgrund des sich verändernden Sonnenstandes unterschiedlich stark von dem Außenlicht erhellt wird. Diese Informationen berücksichtigend wird dann in Abhängigkeit von dem richtungsabhängigen Außenlicht für jeden Raum ein individuelles Stellsignal für die Leuchten erzeugt. Ein zusätzlicher Vorteil dieses Verfahrens besteht darin, daß es nicht notwendig ist, in jedem Raum einen eigenen Helligkeitssensor anzubringen.

Zum Bestimmen der Intensität und Richtungsabhängigkeit des Außenlichts wird beispielsweise von der Anmelderin ein Tageslichtmeßkopf mit der Bezeichnung LM-TLM vertrieben. Dieser bekannte Meßkopf besitzt acht einzelne Fotosensoren, wovon jeweils zwei einer Himmelsrichtung zugeordnet sind. Die Anordnung der Fotosensoren ist derart, daß die horizontalen und vertikalen Beleuchtungsstärken des Außenlichtes umfassend bestimmt werden können. Hierdurch wird zwar eine direkte Bestimmung des richtungsabhängigen Außenlichts ermöglicht, die Anordnung von acht Sensoren erfordert allerdings einen nicht unerheblichen sowohl elektrischen als auch mechanischen Aufwand und ist mit entsprechenden Kosten verbunden.

Eine andere Vorrichtung zur Messung des Außenlichts ist aus der Veröffentlichung "Measurement of the luminous efficacy of daylight", P. J. Littlefair, Lighting Res. Technol. 20(4) 177-188 (1988) bekannt. Diese bekannte Meßvorrichtung besteht aus insgesamt fünf Helligkeitssensoren, wobei einer der Sensoren auf einer horizontalen Oberfläche und die vier weiteren Sensoren in die vier Himmelsrichtungen weisend horizontal ausgerichtet angeordnet sind, um die Richtungsabhängigkeit des Außenlichts zu bestimmen.

Auch diese bekannte Meßvorrichtung ist verhältnismäßig komplex ausgestaltet und kostenintensiv, weshalb der vorliegenden Erfindung die Aufgabe zugrunde liegt, eine nochmals vereinfachte Möglichkeit zum Bestimmen des Außenlichts anzugeben.

Die Aufgabe wird erfindungsgemäß durch eine Meßvorrichtung gemäß Anspruch 1 zum Erfassen des Außenlichts gelöst, die einen auf einer horizontal ausgerichteten Oberfläche angeordneten ersten Helligkeitssensor sowie nur drei weitere Helligkeitssensoren aufweist, die horizontal ausgerichtet und in einer Dreiecksanordnung angeordnet sind.

Es hat sich gezeigt, daß mit der erfindungsgemäßen Anordnung der Helligkeitssensoren des Außenlicht im Hinblick auf seine Intensität und seine Richtungsabhängigkeit effektiv erfaßt werden kann. Im Vergleich zu den bekannten Außenlicht-Meßvorrichtungen wird dies durch den Einsatz von insgesamt lediglich vier Helligkeitssensoren erreicht, so daß gegenüber dem Stand der Technik eine nochmalige Vereinfachung im Aufbau der Meßvorrichtung und damit eine Reduzierung der Kosten erreicht werden kann.

Weiterbildungen der Erfindung sind Gegenstand der Unteransprüche. So sind die Helligkeitssensoren vorzugsweise unter einer diffusen Abdeckung angeordnet, die eine halbkugelförmige Oberfläche aufweist, wobei der erste Helligkeitssensor im Zentrum der Halbkugel angeordnet ist. Der erste Helligkeitssensor ist ferner vorzugsweise im Zentrum des durch die drei horizontal ausgerichteten Sensoren gebildeten Dreiecks angeordnet, wobei diese drei Sensoren ferner jeweils eine Blende aufweisen können.

Mit Hilfe der erfindungsgemäßen Außenlicht-Meßvorrichtung kann effektiv das zur Verfügung stehende Außenlicht bestimmt werden, wobei diese Informationen dann bei der Helligkeitssteuerung eines Raumes oder Gebäudes genutzt werden können.

Im folgenden soll die Erfindung anhand der beiliegenden Zeichnung näher erläutert werden. Es zeigen:
- Fig. 1: ein Beispiel eines einfachen Tageslichtmeßkopfes zur Durchführung eines Verfahrens zur tageslicht-abhängigen Helligkeitssteuerung;
- Fig. 2: ein Ausführungsbeispiel eines erfindungsgemäßen Tageslichtmeßkopfes in seitlicher Ansicht;
- Fig. 3: eine Darstellung der Anordnung der horizontal ausgerichteten Helligkeitssensoren des erfindungsgemäßen Tageslichtmeßkopfes aus Fig. 2; und
- Fig. 4 bis 6: Darstellungen eines Systems zur Steuerung der Helligkeit bei unterschiedlichen Himmelszuständen, bei dem die erfindungsgemäße Außenlicht-Meßvorrichtung zum Einsatz kommt.

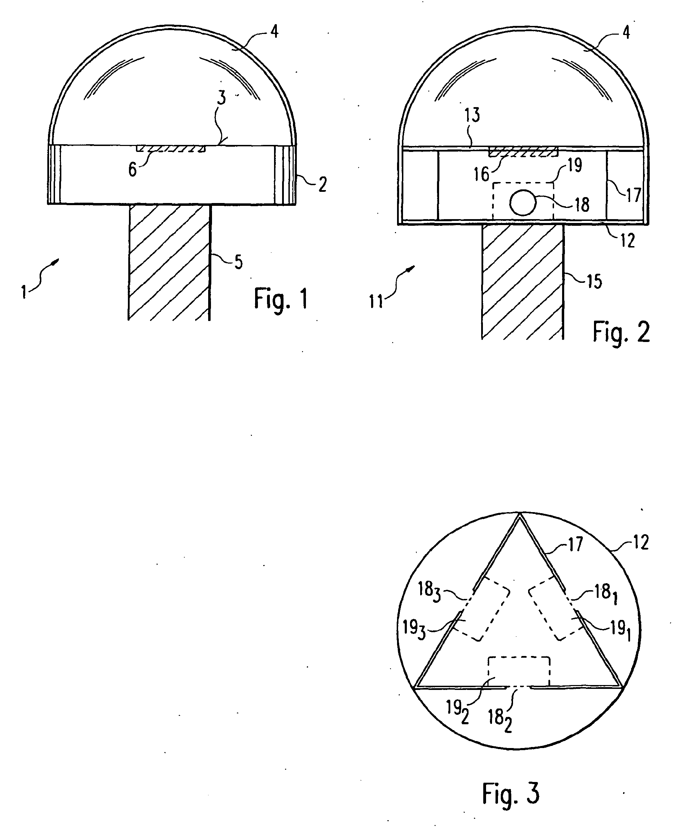

Fig. 1 zeigt zunächst einen einfachen Tageslichtmeßkopf 1, der lediglich einen einzigen Helligkeitssensor 6 aufweist, der auf der horizontal ausgerichteten Oberseite 3 eines zylinderförmigen Sensorgehäuses 2 angeordnet ist. Zum Schutz vor äußeren Einflüssen ist eine halbkugelförmige Abdeckung 4 vorgesehen, die vorzugsweise aus einem das Licht diffus streuenden Material besteht. Der Helligkeitssensor 6 ist im Zentrum der halbkugelförmigen Abdeckung 4 angeordnet, zur Halterung des Sensors 1 dient ein vertikal angeordnetes Montagerohr 5, an dessen Oberseite das Sensorgehäuse 2 befestigt ist.

Der Sensor 6 ist vollständig unverschattet an der Oberseite 3 des Gehäuses 2 angeordnet, so daß möglichst das gesamte, aus allen Richtungen auf die kuppelförmige Abdeckung 4 einfallende Außenlicht erfaßt wird. Das Signal dieses Sensors 6 ist somit ein Maß für die globale Gesamthelligkeit des Außenlichts, es gibt allerdings keine Auskunft über dessen Richtungsabhängigkeit.

Die Figuren 2 und 3 zeigen einen erfindungsgemäßen Meßkopf 11, der insgesamt lediglich vier Sensoren 16 und 19₁ bis 19₃ aufweist. Der erste Sensor 16 ist dabei wiederum auf der horizontal ausgerichteten Deckplatte 13 eines Sensorgehäuses 17 angeordnet und dient zum Erfassen der globalen Gesamthelligkeit des Außenlichts. Innerhalb des Sensorgehäuses 17 sind ferner drei weitere, horizontal ausgerichtete Sensoren 19₁ bis 19₃ angeordnet, welche jeweils um 120° versetzt und gegeneinander abgeschattet sind. Das Sensorgehäuse 17 besitzt - wie in Fig. 3 dargestellt - dementsprechend eine einem gleichseitigen Dreieck entsprechenden Außenform, wobei in der Mitte jeder Seitenwand jeweils eine Öffnung 18₁ bis 18₃ für die dahinter angeordneten Sensoren 19₁ bis 19₃ vorgesehen ist. Durch diese Anordnung ist gewährleistet, daß zumindest einer der Sensoren 19₁ bis 19₃ immer gegen eine direkte Sonneneinstrahlung verschattet ist.

Um den Öffnungswinkel für Licht, welches in der Umgebung reflektiert wird und dementsprechend von der Unterseite her einfallen würde, möglichst gering zu halten, sind die drei horizontal ausgerichteten Sensoren 19₁ bis 19₃ am unteren Rand des Gehäuses 17 angeordnet und werden ferner von der kreisrunden Bodenplatte 12 abgeschattet. Dementsprechend ist der Öffnungshalbraum für diese Sensoren 19₁ bis 19₃ in Richtung des Himmelhalbraums, also nach oben ausgerichtet.

Die vier Sensoren 16 und 19₁ bis 19₃ werden von einer Abdeckung 14 geschützt, die im oberen Bereich wiederum halbkugelförmig ausgebildet ist, wobei der die Gesamthelligkeit erfassende Sensor 16 im Zentrum der Halbkugel angeordnet ist. Im unteren Bereich des Sensorgehäuses 17 ist die Abdeckung 14, die wiederum vorzugsweise aus einem das Licht diffus streuenden Material besteht, zylinderförmig ausgebildet, die Gesamtanordnung ist auch hier auf einem vertikal ausgerichteten Montagerohr 15 angeordnet.

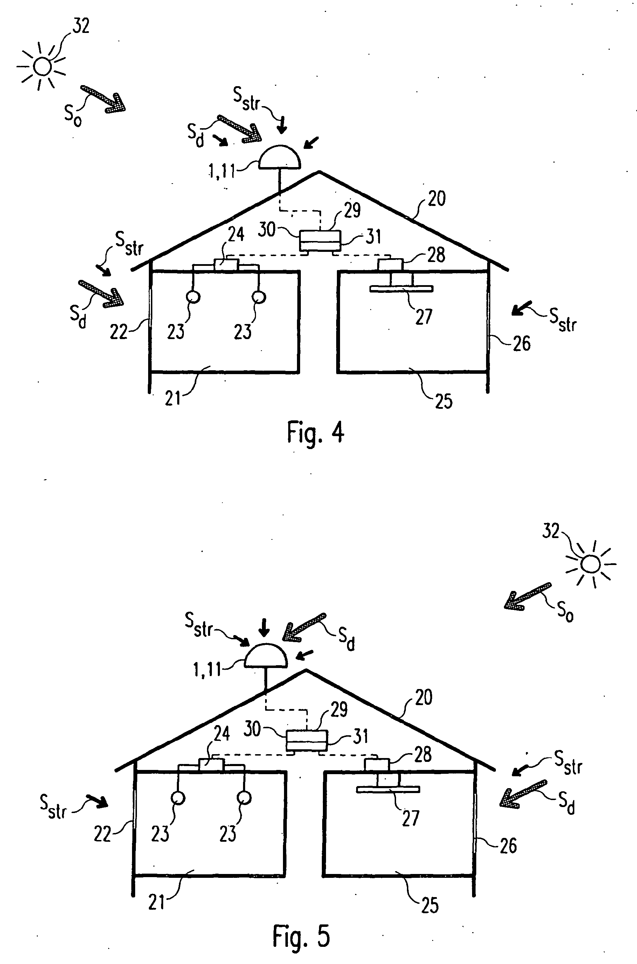

Fig. 4 zeigt ein Gesamtsystem zum Steuern bzw. Regeln der Helligkeit in den verschiedenen Räumen eines Gebäudes, wobei die Räume sowohl mit Innenlicht als auch mit Außenlicht beleuchtet werden. Im dargestellten Beispiel sind in einem Haus 20 zwei Räume 21 und 25 dargestellt, die jeweils ein Fenster 22 bzw. 26 aufweisen, wobei sich die beiden Fenster 22 und 26 allerdings an gegenüberliegenden Seiten des Gebäudes 20 befinden.

Innerhalb der beiden Räume 21 und 25 sind jeweils Beleuchtungsanlagen bzw. Leuchten 23, 27 angeordnet, die für eine künstliche Beleuchtung der Räume 21, 25 vorgesehen sind. Die Helligkeitssteuerung der Leuchten 23 und 27 soll dabei in Abhängigkeit von dem durch die Fenster 22 bzw. 26 einfallenden Außenlicht erfolgen. Hierzu ist am Dach des Gebäudes 20 eine Außenlicht-Meßvorrichtung in Form eines Tageslichtmeßkopfes 1 bzw. 11 vorgesehen, wie er in den Fig. 1 oder 2 und 3 dargestellt ist. Die Signale des Meßkopfes 1, 11 werden einer Steuer- bzw. Regelvorrichtung 29 zugeführt, welche in Abhängigkeit von dem Außenlicht Dimmsignale erzeugt, die an entsprechende Betriebsgeräte 24 bzw. 28 zum Betreiben der Leuchten 23 und 27 weitergeleitet werden.

Die Steuer- bzw. Regelvorrichtung 29 ist im dargestellten Beispiel in zwei Untereinheiten 30 und 31 unterteilt, wobei die erste Einheit 30 die von dem Meßkopf 1 bzw. 11 gelieferten Daten auswertet und daraus - wie noch beschrieben wird - die Intensität und Richtungsabhängigkeit des Außenlichts bestimmt. Auf Grundlage dieser Daten werden von der zweiten Untereinheit 31 die Dimmsignale für die Leuchten 23 und 27 erzeugt und an die Lampen-Betriebsgeräte 24 und 28 übermittelt. Diese Aufteilung der Steuer- bzw. Regelvorrichtung 29 in die beiden Untereinheit 30 und 31 ist allerdings nicht unbedingt notwendig und erfolgt hier in erster Linie zur besseren Verständlichkeit des nachfolgend erläuterten erfindungsgemäßen Verfahrens. Beispielsweise könnte die Steuer- bzw. Regelvorrichtung 29 auch durch einen einzigen Rechner gebildet werden, so daß eine Trennung zwischen den beiden Einheiten 30 und 31 nicht mehr möglich ist. Auf der anderen Seite besteht auch die Möglichkeit, die Funktion der Einheit 31, also aus den Informationen über das Außenlicht Sollwerte für die Leuchten 23 und 27 zu berechnen, den Lampen-Betriebsgeräten 24 und 28 zuzuordnen.

Das Erzeugen der Dimmsignale in Abhängigkeit von dem Außenlicht erfolgt anhand eines Algorithmusses mit bestimmten Kennlinien. Diese Kennlinien tragen dabei der Anordnung des Raumes und seiner Fenster sowie den Wünschen der Helligkeitssteuerung Rechnung und berücksichtigen beispielsweise, ob der Raum zum Arbeiten oder für Präsentationen (Dia-Shows etc.) genutzt werden soll. Beispielsweise können hierdurch bestimmte Beleuchtungsszenarien realisiert werden. Derartige Algorithmen, die in Abhängigkeit von der Intensität und Richtungsabhängigkeit des Außenlichts Dimmsignale für Leuchten erzeugen, sind bereits bekannt und sollen daher im Folgenden nicht weiter erläutert werden. Gegenstand der vorliegenden Erfindung ist in erster Linie, die zum Erzeugen der gewünschten Dimmsignale benötigten Informationen über das Außenlicht auf eine möglichst einfache Weise zu erhalten. Dies soll nachfolgend erläutert werden.

Bei der Bestimmung des richtungsabhängigen Außenlichts ist zu berücksichtigen, daß dessen momentane Intensität und Richtungsabhängigkeit an einem bestimmten Punkt der Erdoberfläche wesentlich von astronomischen und meteorologischen Größen abhängig ist, wie die in den Fig. 4 bis 6 dargestellten Beispiele zeigen.

Dabei wird das zur Verfügung stehende Tageslicht in erster Linie von dem aktuellen Stand der Sonne 32 beeinflußt. Der Sonnenstand wiederum ist von dem Datum, der Uhrzeit und der geographischen Lage abhängig und kann bei Kenntnis dieser drei Parameter mit Hilfe eines sog. Himmelsmodels theoretisch berechnet werden. Dieser Sonnenstand wird im wesentlichen durch den Sonnenhöhenwinkel, der dem Winkel zwischen dem Horizont und dem Sonnenmittelpunkt entspricht, sowie dem Sonnenazimutwinkel, der dem Winkel zwischen der geographischen Nordrichtung und dem Vertikalkreis durch den Sonnenmittelpunkt entspricht, definiert. Darüber hinaus ist die Intensität des Tageslichtes auch von dem Abstand der Sonne zur Erde abhängig, wobei dieser Abstand bei Kenntnis des Datums ebenfalls bekannt ist.

Die auf der Erde und damit auch auf den Tageslichtmeßkopf auftreffende Sonnenstrahlung bzw. das an einem bestimmten Ort vorliegende Tageslicht setzt sich aus der durch die Atmosphäre geschwächten direkten Sonnenstrahlung S_{d} sowie einer in der Atmosphäre diffus gestreuten Streustrahlung Sₛₜᵣ zusammen. Die Streuung und damit Dämpfung des Sonnenlichts erfolgt grundsätzlich durch in der Atmosphäre vorhandene Luftmoleküle oder Dunstpartikel, u.a. allerdings auch durch Wolken oder Nebel.

Fig. 4 zeigt zunächst die Lichtverhältnisse bei einem klaren Himmel. Hier besteht das auf den Meßkopf 1,11 einfallende Außenlicht zum überwiegenden Teil aus der von der Sonne 32 einfallenden Direkteinstrahlung S_{d}, die durch den klaren Himmel gegenüber der von der Sonne 32 ursprünglich emittierten Direktstrahlung S₀ nur geringfügig gedämpft wurde, sowie zu einem geringen Anteil aus einer von allen Seiten einfallenden Streustrahlung Sₛₜᵣ. Dementsprechend wird der Raum 21 zunächst über das der Sonne 32 zugewandte Fenster 22 verhältnismäßig stark durch die Sonnen-Direkteinstrahlung S_{d} erhellt. Da sich hingegen das Fenster 26 des Raumes 25 an einer der Sonne 32 abgewandten Seite des Gebäudes 20 befindet, wird dieser Raum 25 im Gegensatz zum Raum 21 durch die Sonne 32 nicht direkt erhellt. Dennoch wird dieser Raum 25 zumindest durch die aus sämtlichen Richtungen eintreffende Streustrahlung Sₛₜᵣ erhellt, die allerdings bei klarem Himmel im Vergleich zur Direktstrahlung S_{d} deutlich weniger intensiv ist. Die richtungsunabhängige Streustrahlung Sₛₜᵣ erhellt im übrigen zusätzlich zur Direktstrahlung S_{d} auch den ersten Raum 21.

In dem in Fig. 5 dargestellten zweiten Beispiel hat sich der Sonnenstand gegenüber Fig. 4 derart verändert, daß die Sonnen-Direkteinstrahlung S_{d} nunmehr aus einer anderen Richtung erfolgt, so daß nun das Fenster 22 des ersten Raumes 21 im Schatten liegt, während das Fenster 26 des zweiten Raumes 25 direkt von der Sonne 32 bestrahlt werden kann. Dementsprechend wird nun der Raum 21 lediglich durch die Streustrahlung Sₛₜᵣ erhellt, während sich das Außenlicht für den Raum 25 aus der Direktstrahlung S_{d} und der Streustrahlung Sₛₜᵣ zusammensetzt. Die auf den Tageslichtmeßkopf 1, 11 einfallende Gesamtstrahlung, die sich aus der Direktstrahlung S_{d} und der Streustrahlung Sₛₜᵣ zusammensetzt, ist allerdings im wesentlichen gleich groß wie bei dem in Fig. 4 dargestellten Beispiel.

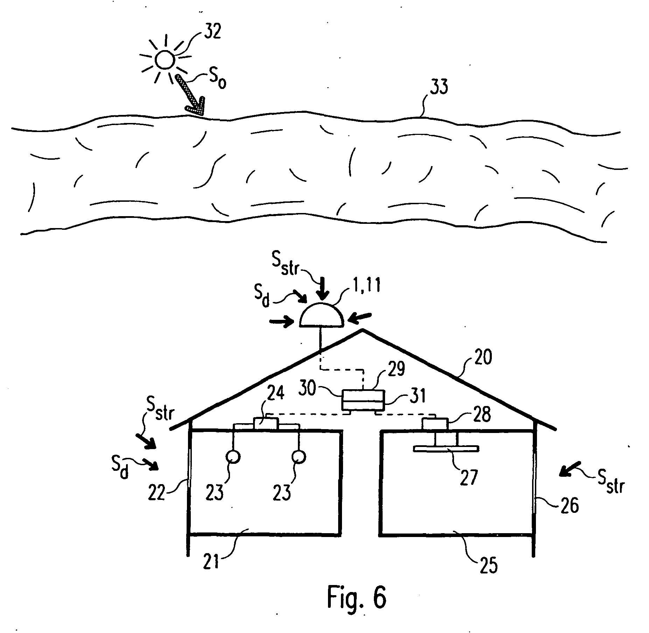

Bei dem dritten in Fig. 6 dargestellten Beispiel entspricht der Sonnenstand im wesentlichen dem Sonnenstand in Fig. 4. Allerdings wird nun die Sonne 32 von einer Wolkenschicht 33 verdeckt, welche die von der Sonne 32 ursprünglich emittierte Direktstrahlung S₀ auf einen niedrigeren und auf den Tageslichtmeßkopf 1, 11 auftreffenden Wert S_{d} reduziert. Neben einer Dämpfung der Direktstrahlung bewirkt allerdings die Wolkenschicht 33 eine starke Streuung des Sonnenlichts, so daß die Intensität der Streustrahlung Sₛₜᵣ zunimmt. Da diese Streustrahlung richtungsunabhängig ist, werden die beiden Räume 21 und 25 im wesentlichen gleich stark erhellt. Die auf den Tageslichtmeßkopf 1, 11 einfallende Gesamtstrahlung ist nunmehr allerdings deutlich geringer als bei dem in Fig. 4 dargestellten Beispiel.

Um geeignete Dimmsignale für die Leuchten 23 und 27 in den Räumen 21 und 25 erzeugen zu können, ist die Kenntnis über die Intensität und Einfallsrichtung der Direktstrahlung S_{d} sowie die Intensität der richtungsunabhängigen Streustrahlung Sₛₜᵣ notwendig. Sind diese Informationen bekannt, kann dann unter Berücksichtigung der Anordnung der Räume und ihrer Fenster ein geeigneter Stellwert für die Leuchten erzeugt werden. Die Informationen über das richtungsabhängige Außenlicht können beispielsweise durch in die verschiedenen Himmelsrichtungen ausgerichtete Helligkeitssensoren und somit durch eine direkte Messung erhalten werden. Allerdings ist auch eine Abschätzung für die Zusammensetzung (Intensität und Richtungsabhängigkeit) des Außenlichts mit Hilfe einer Messung der globalen Gesamthelligkeit sowie evtl. einer Zusatzmessung möglich. Dies soll im folgenden erläutert werden.

Grundsätzlich ist festzuhalten, daß der Stand der Sonne bei Kenntnis der entsprechenden Informationen (Datum, Zeit und geographische Lage) berechnet werden kann. Dementsprechend ist auch die Einfallsrichtung der direkten Sonnenstrahlung bekannt. Damit besteht das Problem in erster Linie darin, das Verhältnis zwischen der Direktstrahlung und der Streustrahlung zu bestimmen. Dieses Verhältnis kann allerdings zumindest mit einer zufriedenstellenden Genauigkeit abgeschätzt werden, wenn der Zustand des Himmels bekannt ist. Entsprechend den in den Fig. 4 bis 6 dargestellten Beispielen besteht nämlich ein Zusammenhang zwischen dem Himmelszustand und dem Verhältnis zwischen Direktstrahlung und Streustrahlung darin, daß bei zunehmend bedecktem Himmel eine größere Streuung des Sonnenlichts erfolgt und dementsprechend der Anteil der richtungsunabhängigen Streustrahlung im Verhältnis zur Direktstrahlung zunimmt. Dementsprechend muß in einem ersten Schritt festgestellt werden, ob der Himmel klar, teilweise oder vollständig bedeckt ist bzw. wie groß die durch die Bewölkung verursachte Dämpfung der Sonnen-Direkteinstrahlung ist.

Es wird der Zustand des Himmels bzw. die Dämpfung der Sonnen-Direkteinstrahlung auf Grundlage einer einzigen Messung abgeschätzt. Hierfür kann beispielsweise der in Fig. 1 dargestellte Meßkopf 1 verwendet werden, der lediglich einen einzigen Helligkeitssensor 6 enthält. Die Anordnung dieses Sensors 6 ist derart, daß sowohl die auf den Meßkopf 1 fallende Direktstrahlung als auch die Streustrahlung und damit die globale Gesamthelligkeit erfaßt wird.

Ob der Himmel nun bedeckt ist oder nicht, wird anhand eines Vergleichs mit einem Referenzwert bestimmt. Als Referenzwert wird vorzugsweise die Gesamthelligkeit bei klarem Himmel verwendet, wobei dieser Wert unter Berücksichtigung der oben genannten Zeit- und Ortsinformationen sowie der Eigenschaften des Sensors 6 und der Abdeckung 4 theoretisch berechnet oder zumindest abgeschätzt (die Berechnungen hierfür sind beispielsweise in der DIN 5034 angegeben) oder mit Hilfe von Messungen empirisch bestimmt werden kann. Ist der von dem Helligkeitssensor erfaßte Helligkeitswert in etwa gleich groß wie der Referenzwert, so kann davon ausgegangen werden, daß ein wolkenloser bzw. klarer Himmel vorliegt. Liegt hingegen der gemessene Wert deutlich unterhalb des Referenzwerts, so kann davon ausgegangen werden, daß der Himmel bedeckt ist. Die Differenz zwischen dem Referenzwert und dem gemessenen Wert kann somit als Maß für die Dämpfung bzw. Wolkendichte herangezogen werden.

Die auf diese Weise bestimmte Dämpfung wird nun verwendet, um den Anteil der Streustrahlung und der Direktstrahlung an der Gesamthelligkeit abzuschätzen, wobei der allgemeinste Zusammenhang darin besteht, daß der Anteil der Streustrahlung bei zunehmender Wolkendichte bzw. Dämpfung zunimmt. Zu berücksichtigen ist ferner, daß aufgrund der Streuung des Sonnenlichts in der Atmosphäre die Streustrahlung immer einen gewissen Mindestanteil an der Gesamthelligkeit hat. Somit wird aufgrund der Differenz zwischen der theoretischen bzw. empirisch bestimmten Gesamthelligkeit und der gemessenen Gesamthelligkeit ein zwischen einen Minimalwert und einem Maximalwert liegender Anteil der Streustrahlung an der Gesamthelligkeit bestimmt. Da ferner die Intensität der tatsächlich vorliegenden Gesamthelligkeit gemessen wurde, kann nunmehr die Intensität der richtungsunabhängigen Streustrahlung sowie der richtungsabhängigen Direktstrahlung (deren Richtung ja bekannt ist) bestimmt werden.

Die soeben beschriebene Abschätzung wird von der Auswerteeinheit 30 der Steuer- bzw. Regelvorrichtung 29 durchgeführt. Die dadurch erhaltenen Informationen über das Außenlicht werden dann von der Regeleinheit 31 in entsprechende Dimmsignale umgesetzt. Hierdurch kann auf einfache Weise eine das Außenlicht berücksichtigende Regelung der Leuchten 23 und 27 erzielt werden. Insbesondere ist der materielle Aufwand hierfür äußerst gering, da der Meßkopf 1 sehr einfach aufgebaut ist. Die beschriebene Vorgehensweise ermöglicht zwar lediglich eine Abschätzung der Zusammensetzung des Außenlichts, die damit erzielte Genauigkeit ist allerdings für einen Großteil der Anwendungen ausreichend.

Um die Zulässigkeit dieser Abschätzung zu erhöhen, wird erfindungsgemäß der zweite Meßkopf verwendet, der insgesamt vier Sensoren 16 und 19₁ bis 19₃ aufweist.

Aufgrund der Anordnung der drei horizontal ausgerichteten Sensoren 19₁ bis 19₃ kann zur Klassifizierung des Himmels zusätzlich ein Vergleich der Meßwerte dieser drei Sensoren 19₁ bis 19₃ herangezogen werden. Da ein typisches Kennzeichen eines bedeckten Himmels ist, daß das Außenlicht im wesentlichen durch die sich in alle Richtungen gleichmäßig ausbreitende Streustrahlung gebildet wird, kann für den Fall, daß alle drei Sensoren im wesentlichen die gleiche Helligkeit messen, von einem bedeckten Himmel ausgegangen werden.

Darüber hinaus kann für jeden Zeitpunkt berechnet werden, welcher der drei horizontal orientierten Sensoren der Sonne am meisten zugewandt ist bzw. welcher Sensor mit Sicherheit verschattet ist. Liefert nun der verschattete Sensor einen größeren Wert als die beiden anderen Sensoren, so ist dies ein sicherer Hinweis dafür, daß ein bedeckter oder zumindest im Bereich der Sonne stark bewölkter Himmel vorliegt. Ist hingegen der von dem der Sonne zugewandten Sensor erfaßte Helligkeitswert deutlich größer als der Meßwert des im Schatten liegenden Sensors, so kann mit großer Wahrscheinlichkeit von einem klaren Himmel und damit einer direkten Bestrahlung des Tageslichtmeßkopfes ausgegangen werden. Darüber hinaus kann der Meßwert des oberen Sensors 16 mit den Werten der horizontal ausgerichteten Sensoren verglichen werden, um den Grad der Bewölkung des Himmels bzw. die Dämpfung festzustellen.

Die erfindungsgemäße Außenlicht-Meßvorrichtung ermöglicht somit mit größerer Genauigkeit die Feststellung des Himmelszustandes. Analog zu der zuerst beschriebenen Variante kann dann bei Kenntnis des Himmelszustands bzw. der Bewölkungsdichte oder Dämpfung der Anteil der direkten Sonnenstrahlung und der Streustrahlung ermittelt und dementsprechend die Intensität und Richtungsabhängigkeit des Außenlichts berechnet werden.

Das Verfahren bietet damit insgesamt die Möglichkeit, den Zustand des Himmels mit einem geringen Aufwand festzustellen und die zur Helligkeitsregelung benötigten Informationen über das Außenlicht zu erhalten. Insbesondere kann dies durch einen sehr einfach aufgebauten Tageslichtmeßkopf erreicht werden, der kostengünstig hergestellt werden kann und aufgrund des einfachen Aufbaus auch deutlich weniger störanfällig ist.

## Patentansprüche

1. Außenlicht-Meßvorrichtung (11) mit mehreren Helligkeitssensoren (16, 19₁-19₃) zum Erfassen des Außenlichts,
**dadurch gekennzeichnet,**
**daß** die Außenlicht-Meßvorrichtung (11) einen auf einer horizontal angeordneten Oberfläche angeordneten ersten Helligkeitssensor (16) zum ermitteln der globalen Gesamthelligkeit des Außenlichts sowie nur drei weitere Helligkeitssensoren (19₁-19₃) aufweist, die zum ermitteln der Richtungsabhängigkeit des Außenlichts horizontal ausgerichtet und in einer Dreiecksanordnung angeordnet sind.

2. Außenlicht-Meßvorrichtung nach Anspruch 1,
**dadurch gekennzeichnet,**
**daß** der erste Helligkeitssensor (16) im Zentrum des durch die drei horizontal ausgerichteten Helligkeitssensoren (19₁-19₃) gebildeten Dreiecks angeordnet ist.

3. Außenlicht-Meßvorrichtung nach Anspruch 1 oder 2,
**dadurch gekennzeichnet,**
**daß** die weiteren Helligkeitssensoren (19₁-19₃) jeweils ein Blende (18₁-18₃) aufweisen.

4. Außenlicht-Meßvorrichtung nach einem der Ansprüche 1 bis 3,
**dadurch gekennzeichnet,**
**daß** die Helligkeitssensoren (16, 19₁-19₃) unter einer diffusen Abdeckung (14) angeordnet sind.

5. Außenlicht-Meßvorrichtung nach Anspruch 4,
**dadurch gekennzeichnet,**
**daß** zumindest ein Teil der Abdeckung (14) eine halbkugelförmige Oberfläche aufweist, wobei der erste Helligkeitssensor (16) im Zentrum der Halbkugel angeordnet ist.

## Claims

1. Exterior light measurement device (11) having a plurality of brightness sensors (16, 19₁-19₃) for detecting the exterior light,
**characterized in that**,
the exterior light measurement device (11) has a first brightness sensor (16), for detecting the global overall brightness of the exterior light, arranged on a horizontally arranged surface, and only three further brightness sensors (19₁-19₃), for detecting the directional dependence of the exterior light, horizontally directed and arranged in a triangular arrangement.

2. Exterior light measurement device according to claim 1,
**characterized in that**,
the first brightness sensor (16) is arranged in the centre of the triangle formed by means of the three horizontally directed brightness sensors (19₁-19₃).

3. Exterior light measurement device according to claim 1 or 2,
**characterized in that**,
the further brightness sensors (19₁-19₃) have in each case a diaphragm (18₁-18₃).

4. Exterior light measurement device according to any of claims 1 to 3,
**characterized in that**,
the brightness sensors (16, 19₁-19₃) are arranged under a diffuse covering (14).

5. Exterior light measurement device according to claim 4,
**characterized in that**,
at least a part of the covering (14) has a hemispherical shaped surface, wherein the first brightness sensor (16) is arranged in the center of the hemisphere.

## Revendications

1. Dispositif de mesure de lumière extérieure (11) comprenant plusieurs capteurs de luminosité (16, 19₁ - 19₃) pour capter la lumière extérieure, **caractérisé en ce que** le dispositif de mesure de lumière extérieure (11) présente un premier capteur de luminosité (16) situé sur une surface disposée horizontalement et servant à déterminer la luminosité globale de la lumière extérieure, ainsi que seulement trois autres capteurs de luminosité (19₁ - 19₃) servant à déterminer la dépendance directionnelle de la lumière extérieure et qui sont ajustés horizontalement et disposés dans une configuration triangulaire.

2. Dispositif de mesure de lumière extérieure selon la revendication 1, **caractérisé en ce que** le premier capteur de luminosité (16) est disposé au centre du triangle formé par les trois capteurs de luminosité (19₁ - 19₃) ajustés horizontalement.

3. Dispositif de mesure de lumière extérieure selon la revendication 1 ou 2, **caractérisé en ce que** les autres capteurs de luminosité (19₁ - 19₃) présentent chacun un obturateur (18₁ - 18₃).

4. Dispositif de mesure de lumière extérieure selon l'une quelconque des revendications 1 à 3, **caractérisé en ce que** les capteurs de luminosité (16, 19₁ - 19₃) sont disposés au-dessous d'un revêtement (14) diffus.

5. Dispositif de mesure de lumière extérieure selon la revendication 4, **caractérisé en ce que** au moins une partie du revêtement (14) présente une surface hémisphérique, le premier capteur de luminosité (16) étant disposé au centre de l'hémisphère.
